Europäisches Patentamt

European Patent Office

Office européen des brevets

(19)

(11) Veröffentlichungsnummer: **0 338 193**
**B1**

(12) **EUROPÄISCHE PATENTSCHRIFT**

(45) Veröffentlichungstag der Patentschrift:
**25.07.90**

(51) Int. Cl.⁵: **B65G 15/44**

(21) Anmeldenummer: **89101483.9**

(22) Anmeldetag: **28.01.89**

(54) Steilförderer-Vorrichtung.

(30) Priorität: **21.04.88 DE 3813331**

(43) Veröffentlichungstag der Anmeldung:
**25.10.89 Patentblatt 89/43**

(45) Bekanntmachung des Hinweises auf die Patenterteilung:
**25.07.90 Patentblatt 90/30**

(84) Benannte Vertragsstaaten:
**AT BE CH DE ES FR GB GR IT LI LU NL SE**

(56) Entgegenhaltungen:
**AT-B- 336 490**
**DE-A- 2 317 671**
**US-A- 4 008 799**

**DE-GM-7616271**

(73) Patentinhaber: **FIRMA ERNST SIEGLING,**
**Lilienthalstrasse 6/8, D-3000 Hannover 1(DE)**

(72) Erfinder: **Herzke, Harry, Allensteiner Weg 11,**
**D-3000 Hannover 51(DE)**

(74) Vertreter: **Polzer, Alfred, Bahnhofstrasse 3,**
**D-3000 Hannover 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung bezieht sich auf eine Steilförderer-Vorrichtung nach dem Oberbegriff des Anspruches 1.

Das DE-GM 7 616 271 zeigt ein Förderband aus Gummi oder gummiähnlichem Werkstoff zur Steilförderung von großstückigem Material mit über die Bandebene hervorstehenden und in Förderrichtung geneigt angeordneten, als breite Leisten oder schmale Klappen ausgebildeten Mitnehmerzungen. Beginnt die vom Transportband bewegte Last entgegen der Transportrichtung zu rutschen, so schlägt das Transportgut gegen die freie Querkante der Mitnehmerzunge an und verschwenkt diese in der Weise, daß der Winkel zwischen dieser einerseits und der Transportfläche andererseits vergrößert wird. Hierdurch wird die Anschlagfläche der Mitnehmerzungen vergrößert und eine Rutschbewegung des Transportgutes in Richtung der tiefsten Stelle des Steilförderers verhindert.

Nachteilig ist, daß die im rücklaufenden Trum des Transportbandes befindlichen, nach außen ragenden Mitnehmerzungen gegen die Rollen auflaufen mit der Folge, daß die Mitnehmerzungen an der Einspannstelle im Transportband im Laufe der Zeit reißen und damit einen einwandfreien Betrieb in Frage stellen.

Hier setzt der Erfindungsgedanke ein. Die Erfindung geht von der Überlegung aus, durch Wahl geeigneter Mittel dafür zu sorgen, daß die Einspannstellen, also Übergangsstellen während des Auflaufens der Mitnehmerzungen gegen die Rollen nicht übermäßig belastet werden, damit Rißbildungen an den kritischen Stellen auf alle Fälle vermieden werden.

Diese Aufgabe wird bei einer Steilförderer-Vorrichtung nach dem Oberbegriff des Anspruches 1 dadurch gelöst, daß die Dicke der Zungen gleich ist der Dicke des Transportbandes, wobei die Querkante in Transportrichtung hinter der Übergangsseite liegt und ihr eine Mitnehmerleiste zugeordnet ist.

Durch diese Maßnahme wird erreicht, daß die Mitnehmerleisten selbst gegen die Rollen auflaufen mit der Folge, daß erstere zusammen mit den sie tragenden Mitnehmerzungen in den zwischen dem vorlaufenden und dem rücklaufenden Trum des Transportbandes liegenden Raum einschwenkt und damit an den kritischen Stellen übermäßige Beanspruchungen vermieden werden. Wenn sich die entsprechende Mitnehmerleiste über die Rolle hinwegbewegt hat, so schwenkt sie aufgrund der Elastizität der Mitnehmerzunge wieder in ihre Ausgangsstellung zurück, wobei die Mitnehmerzunge und das diese umgebende Transportband völlig bündig liegen.

Ein besonderer Vorteil der Erfindung liegt darin, daß man die Mitnehmerzungen z.B. durch Stanzen u. dgl. nachträglich in glatt durchgehende Transportbänder einarbeiten kann. Werden dann die Mitnehmerzungen noch mit den Mitnehmerleisten versehen, so ist die Umrüstung der herkömmlichen Transportbänder ohne größeren Zeit- und Materialaufwand möglich.

Zweckmäßig ist zwischen den Kanten der Mitnehmerzungen und den diese umgebenden Kanten das Transportbandes ein Spalt vorgesehen.

Nach einer besonders zweckmäßigen Verwirklichungsform der Steilförderer-Vorrichtung, bei welcher in Bewegungsrichtung des rücklaufenden Trums des Transportbandes gesehen vor einer jeden Rolle eine Leitvorrichtung angeordnet ist, welche mit dem rücklaufenden Trum einen spitzen Winkel einschließt, sind an einer jeden Mitnehmerleiste ein oder mehrere nach außen ragende Zapfen angeordnet, welche sich während der Bewegung des rücklaufenden Trums längs der Leitvorrichtung bewegen.

Dieser Steilförderer eignet sich namentlich zum Transport von faserförmigem Transportgut, z. B. Tabak, Baumwolle, Faservliesen und dergleichen.

Zwei Ausführungsbeispiele des erfindungsgemäßen Steilförderers sind nachstehend anhand der Zeichnung noch näher veranschaulicht. Diese zeigt in rein schematischer Weise:

Figur 1 eine Teilansicht des Steilförderers gemäß der Erfindung,

Figur 2 eine Teildraufsicht in vergrößertem Maßstab auf die Anordnung nach Figur 1,

Figur 3 einen senkrechten Schnitt längs der Linie III-III in Figur 2 und

Figur 4 eine Teilansicht einer weiteren Verwirklichungsform des Steilförderers gemäß der Erfindung.

Der Steilförderer besteht aus einem um Umlenkwalzen geführten, endlosen, elastischen Transportband 1 mit der nach außen weisenden Transportfläche. Aus Gründen der Übersichtlichkeit ist lediglich die eine Umlenkwalze 2 dargestellt, die zweckmäßig antreibbar ist.

Die Laufrichtung des Transportbandes 1 ist mit L bezeichnet.

Mit 3 sind Anschläge angedeutet, welche in Längsrichtung des Transportbandes 1 mit Abstand zueinander angeordnet sind. Diese Anschläge 3 haben bei der dargestellten Ausführungsform im Querschnitt die Form von Trapezen, können aber auch jede andere beliebige Form aufweisen. Es liegt im Rahmen der Erfindung, auch mehrere, in Querrichtung des Transportbandes 1 mit Abstand zueinanderliegende Anschläge 3 vorzusehen. Auch insoweit ist also der Erfindungsgedanke keineswegs beschränkt.

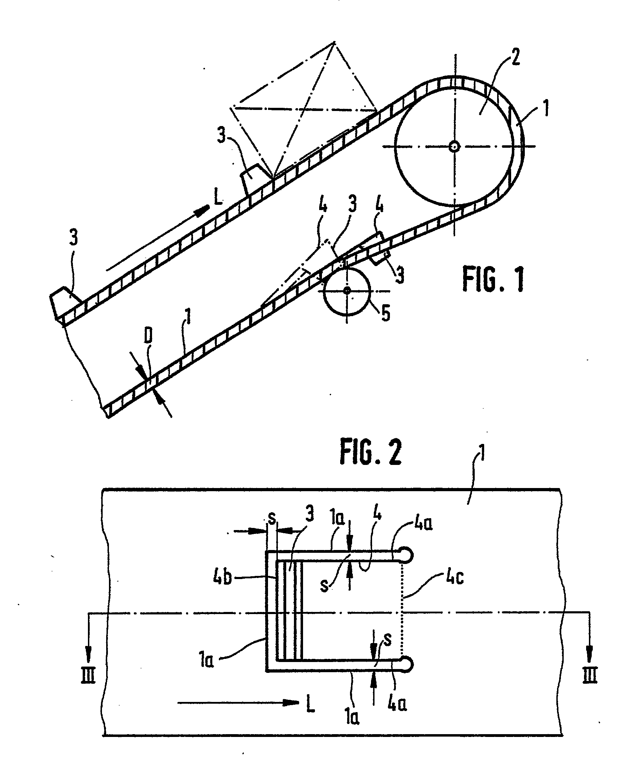

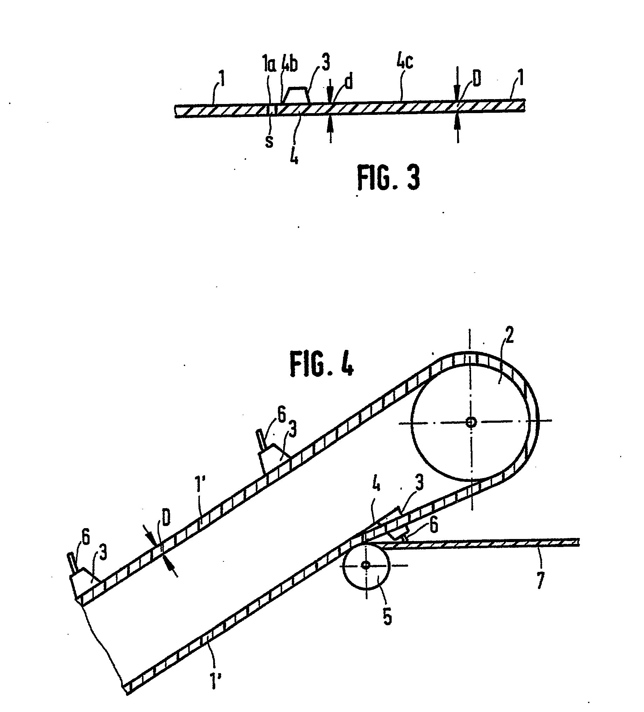

Einem jeden Anschlag 3 ist eine Zunge 4 mit den beiden Längskanten 4a sowie der Querkante 4b zugeordnet. Wie namentlich die Figuren 2 und 3 deutlich zeigen, geht die Zunge 4 an der zur Querkante 4b parallel liegenden Seite 4c (Übergangsstelle) in das Transportband 1 bündig über, so daß keinerlei Stoßstelle zu verzeichnen ist.

Zwischen den Kanten 4a und 4b der Zunge 4 und den diese umgebenden Kanten 1a des Transportbandes 1 ist ein Spalt s vorgesehen, so daß ein reibungsfreies Verschwenken der Zunge 4 möglich ist.

Die Dicke d (Figur 3) der Zunge 4 ist gleich der Dicke D des Transportbandes 1.

Wie namentlich die Figur 1 der Zeichnung zeigt, liegt der Anschlag 3 im Bereich der Querkante 4b der Zunge 4 und in Transportrichtung gesehen hinter der Übergangsseite 4c.

Wie aus Figur 1 ersichtlich, stützt sich das rücklaufende Trum des Transportbandes 1 auf eine Führung in Form von in Bewegungsrichtung des letzteren mit Abstand zueinanderliegenden Rollen ab, wobei aus Gründen der Übersichtlichkeit lediglich eine einzige Rolle 5 dargestellt ist.

Die Arbeitsweise des Steilförderers nach den Figuren 1–3 ist die folgende:

Es sei einmal angenommen, das beispielsweise quaderförmige Stückgut habe die höchste Stelle des Transportbandes erreicht und beginnt wegen der zu geringen Reibung nach unten zu rutschen. Das Transportgut gelangt dadurch zum Stillstand, daß es sich gegen den Anschlag 3 anlegt.

Beim Rücklauf schlägt der Anschlag 3 gegen die Rolle 5 an und verschwenkt bei der Weiterbewegung des rücklaufenden Trums des Transportbandes 1 in den zwischen Ober- und Untertrum liegenden Raum, wie dies in Figur 1 mit einem gestrichelten Linienzug dargestellt ist. Es ist klar, daß die Auflaufkante des Anschlages 3 zweckmäßig so ausgebildet ist, daß der beim Aufprall entstehende Impuls auf ein Minimum herabgesetzt wird.

Hat das rücklaufende Trum des Transportbandes 1 den Bereich der Rolle 5 wieder verlassen, dann wird der Anschlag wieder freigegeben, so daß er sich als Folge der Elastizität der Zunge 4 wieder in die Ausgangsstellung zurückbewegen kann, in welcher die Zunge 4 mit dem Transportband 1 vollständig bündig liegt.

Die Figur 4 der Zeichnung zeigt eine etwas abgewandelte Ausführungsform des Steilförderers. Dabei ist an einem jeden Anschlag mindestens ein nach außen ragender Dorn 6 oder Zapfen und der gleichen angeordnet, der ggf. an einem Ende auch hakenförmig abgebogen sein kann.

Vor einer jeden Rolle 5 - in Bewegungsrichtung des rücklaufenden Trums des Transportbandes 1 gesehen - ist eine Leitvorrichtung 7, z. B. in Form eines Leitbleches vorgesehen, welches mit dem rücklaufenden Trum des Transportbandes 1 einen spitzen Winkel einschließt.

Wenn der entsprechende Dorn 6 in den Bereich der Leitvorrichtung 7 gelangt, so weichen die Zunge 4 und damit der mit ihr verbundene Anschlag 3 im Verlaufe der Bewegung des rücklaufenden Trums des Transportbandes 1 in den Zwischenraum zwischen Ober- und Untertrum des Transportbandes 1 aus. Ist der Bereich der Rolle 5 wieder verlassen, so verschwenkt die Zunge 4 mit dem Anschlag 3 wieder in die Ausgangsstellung zurück, wie dies auch bei der Ausführungsform nach den Figuren 1–3 der Fall ist.

Die Verwirklichungsform nach Figur 4 eignet sich namentlich zum Transport von faserförmigem Transportgut, z. B. Tabak, Baumwolle, Faservlies und dergleichen.

Ein besonderer Vorteil der Erfindung liegt darin, daß man die Zungen 4 z. B. durch Stanzen und dergleichen nachträglich in glatt durchgehende Transportbänder einarbeiten kann. Werden dann die Zungen 4 noch mit den Anschlägen 3 versehen, so ist die Umrüstung der herkömmlichen Transportbänder ohne größeren Zeit- und Materialaufwand möglich.

**Patentansprüche**

1. Steilförderer-Vorrichtung, bestehend aus einem um Umlenkrollen (2) geführten endlosen, elastischen Transportband (1), das sich im rücklaufenden Trum auf eine Führung, z.B. Rollen, abstützt und das in Längsrichtung im Abstand zueinanderliegende Mitnehmerzungen (4) mit zwei Längskanten (4a) und einer Querkante (4b) aufweist, gegen welche das Transportgut im Falle des Rutschens anschlägt, wobei jede Zunge (4) an der zur Querkante (4b) parallel liegenden Seite (4c) in das Transportband (1) bündig übergeht, dadurch gekennzeichnet, daß die Dicke (d) der Zungen (4) gleich ist der Dicke (D) des Transportbandes (1) und daß die Querkante (4b) in Transportrichtung hinter der Übergangsseite (4c) liegt und ihr eine Mitnehmerleiste (3) zugeordnet ist.

2. Vorrichtung nach Anspruch 1, dadurch gekennzeichnet, daß zwischen den Kanten (4a, 4b) der Mitnehmerzungen (4) und den diese umgebenden Kanten (1a) des Transportbandes (1) ein Spalt (s) vorgesehen ist.

3. Vorrichtung, wobei in Bewegungsrichtung des rücklaufenden Trums des Transportbandes gesehen vor einer jeden Rolle eine Leitvorrichtung angeordnet ist, welche mit dem rücklaufenden Trum einen spitzen Winkel einschließt, nach Anspruch 1 und 2, dadurch gekennzeichnet, daß an einer jeden Mitnehmerleiste (3) ein oder mehrere nach außen ragende Zapfen (6) angeordnet sind, welche sich während der Bewegung des rücklaufenden Trums längs der Leitvorrichtung (7) bewegen.

**Claims**

1. A steep conveyor device comprising an endless elastic conveyor belt (1) which is trained around reversing rollers (2) and the return run of which is supported on a guide, e. g. rollers, said belt having longitudinally spaced-apart driver lugs (4) with two longitudinal edges (4a) and one transverse edge (4b), against which the material being conveyed collides in the event of slipping, each lug (4) merging flush into the conveyor belt (1) at the side (4c) parallel to the transverse edge (4b), characterised in that the thickness (d) of the lugs (4) is equal to the thickness (D) of the conveyor belt (1) and in that the transverse edge (4b) is situated after the merging side (4c) as considered in the direction of conveyance and a driver strip (3) is associated therewith.

2. A device according to claim 1, characterised in that there is a gap (s) between the edges (4a, 4b) of the driver lugs (4) and those edges (1a) of the conveyor belt (1) which surround the same.

3. A device, with a guide device disposed in front of each roller as considered in the direction of the return run of the conveyor belt, said guide device including an acute angle with the return run, in accordance with claims 1 and 2, characterised in that one or more outwardly extending pins (6) are disposed on each driver strip (3) and move along the guide device (7) during the movement of the return run.

**Revendications**

1. Dispositif transporteur incliné constitué d'une bande transporteuse (1) élastique sans fin guidée autour de rouleaux de renvoi (2), qui s'appuie dans le brin de retour sur un guidage, par exemple des rouleaux et qui présente des languettes d'entraînement (4), disposées à distance les unes des autres en direction longitudinale, avec deux arêtes longitudinales (4a) et une arête transversale (4b), contre lesquelles la matière transportée vient en appui en cas de glissement, chaque languette (4) passant à fleur à la bande transporteuse (1) au côté (4c) se trouvant parallèle à l'arête transversale (4b), caractérisé en ce que l'épaisseur (d) des languettes (4) est égale à l'épaisseur (D) de la bande transporteuse (1) et que l'arête transversale (4b) se trouve derrière le côté de passage (4c) dans la direction de transport et une barrette d'entraînement (3) lui est adjointe.

2. Dispositif selon la revendication 1, caractérisé en ce qu'une fente (s) est prévue entre les arêtes (4a, 4b) des languettes d'entraînement (4) et les arêtes (1a) de la bande transporteuse (1) qui les entourent.

3. Dispositif selon la revendication 1 et 2, un dispositif de guidage étant prévu avant chacun des rouleaux, vu dans la direction de déplacement du brin de retour de le bande transporteuse, qui forme un angle aigu avec le brin de retour, caractérisé en ce qu'un ou plusieurs tenons (6), en saillie vers l'extérieur qui se déplacent le long du dispositif de guidage (7) pendant le déplacement du brin de retour, sont disposés à chacune des barrettes d'entraînement (3).

**FIG. 1**

**FIG. 2**

FIG. 3

FIG. 4